# EUROPEAN PATENT SPECIFICATION

(11) **EP 2 907 474 B1**
(45) Date of publication and mention of the grant of the patent: **02.08.2017**
(21) Application number: 14382055.3
(22) Date of filing: 18.02.2014
(51) Int. Cl.: A61C 8/00, A61C 9/00

(54) **Post for modelling dental implants by means of a radiologic test.**
Säule zur Modellierung von Zahnimplantaten mittels eines radiologischen Tests
Montant pour modéliser des implants dentaires au moyen d'un test radiologique

(43) Date of publication of application: 19.08.2015
(73) Proprietor: ACCURATE FIT, S.L., 41001 Sevilla (ES)
(72) Inventor: Soler Cegarra, Josep, 08810 Sant Pere de Ribes, Barcelona (ES)
(74) Representative: Gallego Jiménez, José Fernando

(56) References cited:
- DE-U1-202013 005 821
- US-A1- 2002 039 717
- US-A1- 2012 135 371
- US-A1- 2014 011 155

## Description

### Object of the invention.

The present invention relates to a post for modelling dental implants by means of a radiologic test, said modelling comprising: positioning X-ray detectable posts on the implants fitted in the mouth of a patient, performing a radiologic test of the patient's mouth having the posts placed on the implants, converting the CAT scan results into a three-dimensional computer model for CAD/CAM processing, defining the posts in the computer model, CAD/CAM modelling of the structure according to the computer model with the posts defined, and generating a file with the positions and orientations for calculation of the milling program for the dental prosthesis structures.

The post of the invention, comprising a body of biocompatible and radiologically visible material and a threaded stem for attachment to a dental implant, presents suitable features to permit its detection and the accurate determination of its position and orientation in the patient's mouth by means of ionizing radiation, magnetic resonance or other similar radiologic test.

### Application field of the invention.

This invention is applicable in the field of dental implantology.

### Background of the invention.

In the patent application WO2012113947 filed in the name of the same owner as the present invention, a method for designing dental prosthesis structures on implants is described, said method comprising: positioning X-ray detectable posts on the implants fitted in the mouth of a patient, performing a CAT scan of the patient's mouth having the posts placed on the implants, converting the CAT scan results into a three-dimensional computer model for CAD/CAM processing; defining the posts in the computer model; CAD/CAM modelling of the structure according to the computer model with the posts defined, and generating a file with the positions and orientations for calculation of the milling program for the dental prosthesis structures.

This method is a significant step forward in the design and milling of dental prosthesis structures compared with previously known techniques that are based on making a plaster mould from an impression taken in the mouth using a silicone tray, as it allows for reducing cumulative errors occurring in such earlier processes.

In this background, it is contemplated that the posts present, at their fitting area with the implant, a zone at least one millimetre thick that is transparent to X-rays, so that the posts are well defined and cannot be confused with the implants during the obtaining of their outlines from the results of the radiologic test.

One of the drawbacks of this method is the risk that the radiologically visible posts are not mounted at their fullest onto their respective implants, since it would be especially complex to differentiate the post from the implant itself from the radiological test.

In practice, the incorporation of an area transparent to X-rays at the fitting area of the post with the implant poses different problems:
A first drawback is that the incorporation in the post of said area transparent to X-rays implies a weakening of the joining zone of the threaded shank with the body of the post, with the consequent risk of breakage of the shank inside the implant during fixation or removal of the post, and the disablement of the implant.

A second, but no less important drawback, is that the existence in the post of said area transparent to X-rays does not allows for determining, from the results of a radiologic test, whether the post was threaded to the fullest onto the implant, or guarantee if the post was in a correct position for defining the position of the posts prior to the definition of the posts in the computer model, the modelling of the structure on the basis of the computer model with the defined posts and the generation of a file with the positions and orientations for calculating the milling program for the dental prosthesis structures.

Thus, the technical problem that arises is the development of a post for modelling dental implants by means of a radiologic test prior to milling a dental prosthesis structure, and to avoid dimensional errors resulting from improper placement of the posts onto the implants, for example due to insufficient tightening.

US 2002/039717 A1 discloses a healing abutment for attachment to a dental implant with marking locations thereon. The marking locations either lack or have markers that provide a binary code system for retrieving information about the healing abutment and the underlying implant.

DE 20 2013 005821 U1 shows a body of reference for determining a position and orientation of a dental implant, comprising: a bottom, an interface, a region of three-dimensional scanning with at least four different scan surfaces, a transition portion between the region of scanning and the interface, and a set screw in the implant.

US 2014/011155 A1 discloses a scan body element to be inserted in a dental implant or implant analog for scanning with, or in, an optical scanning system. The scan body element has a polymer or a ceramic top part (TP) with at least one geometric feature (SI) recognizable in the scanning.

US 2012/135371 A1 discloses a scan body for detecting the position and orientation of a dental implant. The scan body includes a three-dimensional scannable region having an asymmetrical geometry permitting unequivocal detection of its surface from different scanning directions in relation to a longitudinal center axis of the scan body.

### Description of the invention.

The post for modelling dental implants using a radiologic test, comprising a body of biocompatible and radiologically visible material and a threaded shank for attachment onto a dental implant, presents features aimed at solving the problems exposed, allowing to accurately determine the position and orientation of the posts in a computer model derived from the results of a magnetic resonance, ionizing radiation of the CAT (computerized axial tomography) or CBCT (cone beam computerized tomography) type, or any other similar radiologic test.

To this end and according to the invention this post comprises a closed cavity, with a predetermined geometric shape, arranged in a pre-set position on the post and defined in the same material from which the post is made; said cavity containing a substance of different density from that of the material from which the post is made.

The substance contained in said cavity of the post has suitable properties for the cavity containing such substance and/or the substance itself to be visible through magnetic resonance, ionizing radiation of the CAT (computerized axial tomography) type, CBCT (cone beam computerized tomography), or any other similar radiologic test, determining the position and orientation of the post (1) attached to an implant placed in the patient's mouth.

The conformation of this post, except for the substance contained in said cavity, in a biocompatible and radiologically visible material allows for detecting, from the radiologic test results, whether the post is fixed to the fullest and properly over the corresponding implant, or the body of the post is distanced from the implant, which would evidence a fixation error.

The definition in the post of said cavity with a predetermined geometric shape and arranged in a pre-set position on the post allows said cavity and/or the substance contained therein to be perceivable in a radiological test allowing to accurately determine the position and orientation of the posts attached onto the implants in the patient's mouth.

Thus dimensional errors determined by a possible incorrect fixation of the posts on the implant or in the definition of the positions and orientations of these posts based on the results obtained from the radiological test are avoided.

In this invention it is intended that the substance contained in the cavity defined in the post can be a fluid or a solid one.

### Description of figures.

In order to complement the description that is being carried out and with the purpose of facilitating the understanding of the characteristics of the invention, the present description is accompanied by a set of drawings wherein, by way of a non-limiting example, the following has been represented:

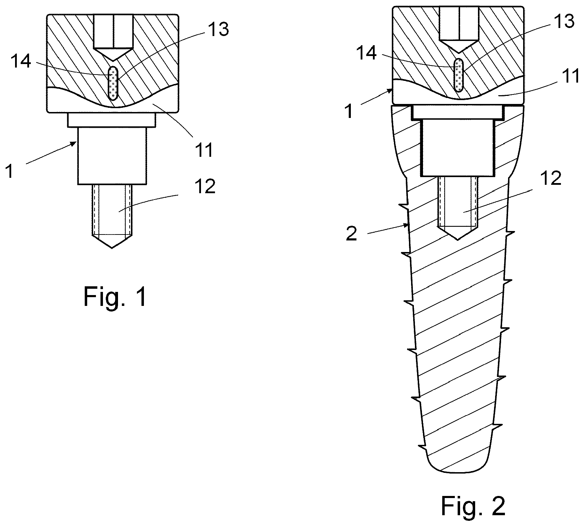

- Figure 1 shows a schematic elevation view of an exemplary embodiment of a post for modelling dental implants by means of a radiologic test according to the invention, sectioned along a vertical plane.
- Figure 2 shows an elevation view of the post of the previous figure fixed on a dental implant.

### Preferred embodiment of the invention.

In the exemplary embodiment shown in the accompanying figures the post (1) comprises a body (11) of biocompatible and radiologically visible material, which extends from one end of a threaded shank (12) formed in the same material as the body (11).

The post (1) comprises a closed cavity (13) of a predetermined geometric shape, particularly cylindrical, and arranged at a predefined position on the post (1), in this case in correspondence with the longitudinal axis of the post and at predetermined distances from the end of the body (11) and the threaded shank (12).

The cavity (13) internally contains a substance (14), in solid or fluid state, of a density different to the material from which the post (1), i.e. the body (11) and the threaded shank (12), is made; said substance (14) being suitable to allow the visualization and differentiation of the cavity (13) or of the substance (14) itself, by performing a radiologic test, whether a magnetic resonance, a ionizing radiation or other similar radiological test.

The purpose of this post (1) is to allow the attachment of multiple units therefrom onto implants (2) placed in the mouth of a patient in order to accurately determine the position of the posts and the implants by means of a radiologic test of the type mentioned above, then making the conversion of the result from said test into a three-dimensional computer model for its CAD/CAM processing; defining the posts in the computer model and the CAD/CAM modelling of the structure on the basis of the computer model with the posts defined, by finally generating a file with the positions and orientations to calculate the milling program for a dental prosthesis structure attachable onto the mentioned implants.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. Post for modelling dental implants by means of a radiologic test, said post (1) comprising a body (11) of biocompatible and radiologically visible material, and a threaded shank (12) for being attached to a dental implant (2); **characterized in that** it comprises a closed cavity (13) of a predetermined geometric shape, arranged at a predefined position in the post (1), which is defined in the material constituting the post itself, and containing a substance (14) of a density different from that of the material constituting the post (1) itself; said substance (14) having suitable properties so that the cavity (13) containing it and/or the substance (14) itself is visible through magnetic resonance, ionizing radiation of the CAT (computerized tomography) or CBCT (cone beam computerized tomography) type, thus determining the position and orientation of the post (1) once coupled to an implant (2) placed in the patient's mouth.

2. Dental implant according to claim 1, **characterized in that** the substance (14) contained in the cavity (13) is constituted of a fluid or a solid.

## Patentansprüche

1. Säule zum Modellieren von Zahnimplantaten mittels eines radiologischen Tests, wobei die Säule (1) einen Körper (11) aus biokompatiblem und radiologisch sichtbarem Material umfasst, und ein Gewindestift (12) um an ein Zahnimplantat (2) angebracht zu sein; **dadurch gekennzeichnet, dass** er einen geschlossenen Hohlraum (13) einer vorbestimmten geometrischen Form umfasst, die an einer vorgegebenen Position in der Säule (1) angeordnet ist, die durch das Material definiert ist, aus dem die Säule selbst besteht, und Enthalten einer Substanz (14) von einer Dichte, die sich von der des Materials, aus dem die Säule (1) selbst besteht, unterscheidet; wobei die Substanz (14) geeignete Eigenschaften aufweist, so dass der Hohlraum (13), der sie enthält und/oder die Substanz (14) selbst durch magnetische Resonanz, ionisierende Strahlung vom Typ CAT (Computertomographie) oder CBCT (Computertomographie mittels konischem Strahl) sichtbar ist, wodurch die Position und Ausrichtung der Säule (1) bestimmt wird, sobald diese an ein Implantat (2) gekoppelt ist, das im Patientenmund platziert ist.

2. Zahnimplantat nach Anspruch 1, **dadurch gekennzeichnet, dass** die Substanz (14), die im Hohlraum (13) enthalten ist, aus einem Fluid oder einem Feststoff besteht.

## Revendications

1. Montant pour modéliser des implants dentaires au moyen d'un test radiologique, ledit montant (1) comprenant un corps (11) de matériau biocompatible et radiologiquement visible, et une tige filetée (12) destinée à être fixée à un implant dentaire (2); **caractérisé en ce qu'**il comprend une cavité fermée (13) de forme géométrique prédéterminée, agencée au niveau d'une position prédéfinie dans le montant (1), qui est définie dans le matériau constituant le montant lui-même, et contenant une substance (14) d'une densité différente de celle du matériau constituant le montant (1) lui-même; ladite substance (14) ayant des propriétés adaptées pour que la cavité (13) la contenant et/ou la substance (14) elle-même soit visible par résonance magnétique, rayonnement ionisant du type CAT (tomographie informatisée) ou CBCT (tomographie informatisée à faisceaux coniques), déterminant ainsi la position et l'orientation du montant (1) une fois couplé à un implant (2) placé dans la bouche du patient.

2. Implant dentaire selon la revendication 1, **caractérisé en ce que** la substance (14) contenue dans la cavité (13) est constituée d'un fluide ou d'un solide.
